**Europäisches Patentamt**

(19) **European Patent Office**

**Office européen des brevets**

(11) Publication number: **0 232 303**
**B1**

# (12) EUROPEAN PATENT SPECIFICATION

(45) Date of publication of the patent specification:
27.09.89

(21) Application number: **86904311.7**

(22) Date of filing: **21.07.86**

(86) International application number:
**PCT/GB 86/00427**

(87) International publication number:
**WO 87/00896 (12.02.87** Gazette 87/4)

(51) Int. Cl.⁴: **F 16 D 55/02,** F 16 D 66/02

---

(54) **FRICTION PADS FOR DISC BRAKES.**

---

(30) Priority: **29.07.85 ES 545636**

(43) Date of publication of application:
**19.08.87 Bulletin 87/34**

(45) Publication of the grant of the patent:
**27.09.89 Bulletin 89/39**

(84) Designated Contracting States:
**AT BE CH DE FR GB IT LI LU NL SE**

(56) References cited:
**EP-A- 0 153 280**
**EP-A- 0 180 555**
**DE-A- 3 222 859**
**GB-A- 1 424 769**
**GB-A- 1 535 720**
**GB-A- 1 602 846**
**GB-A- 2 012 897**
**GB-A- 2 027 141**
**GB-A- 2 107 415**
**GB-A- 2 115 893**
**GB-A- 2 121 128**
**GB-A- 2 142 394**

(73) Proprietor: **EUROPEA DE FRICCION S.A., Ctra.**
**Nacional, 232 Km 71, Alfaro, La Rioja (ES)**

(72) Inventor: **PEREDA, Antonio, Calle Huertas No. 2-2,**
**Alfaro La Rioja (ES)**

(74) Representative: **Maguire, Peter Albert et al, P.A. Maguire**
**& Co. 12, The Broadway, St. Ives, Cambridgeshire**
**PE17 4BN (GB)**

---

**Description**

*Technical Field*

The invention relates to friction pads for disc brakes.

*Background Art*

When braking, disc brake friction pads, which comprise a backing plate and a covering of friction material on one side of the backing plate, move into contact with the disc and then move away from the disc once the braking action has been completed. The sliding movement which the pads undertake during use means that some freedom of movement must exist between the pad backing plates and the elements, usually known as callipers, into which the plates are fitted. Such freedom of movement has certain drawbacks inasmuch as it tends to make the pads squeal in use in addition to causing vibration effects during braking.

Various solutions designed to overcome this problem are already known all of which start from one common design feature, namely the use of spring elements which assist in maintaining the positioning of the pad.

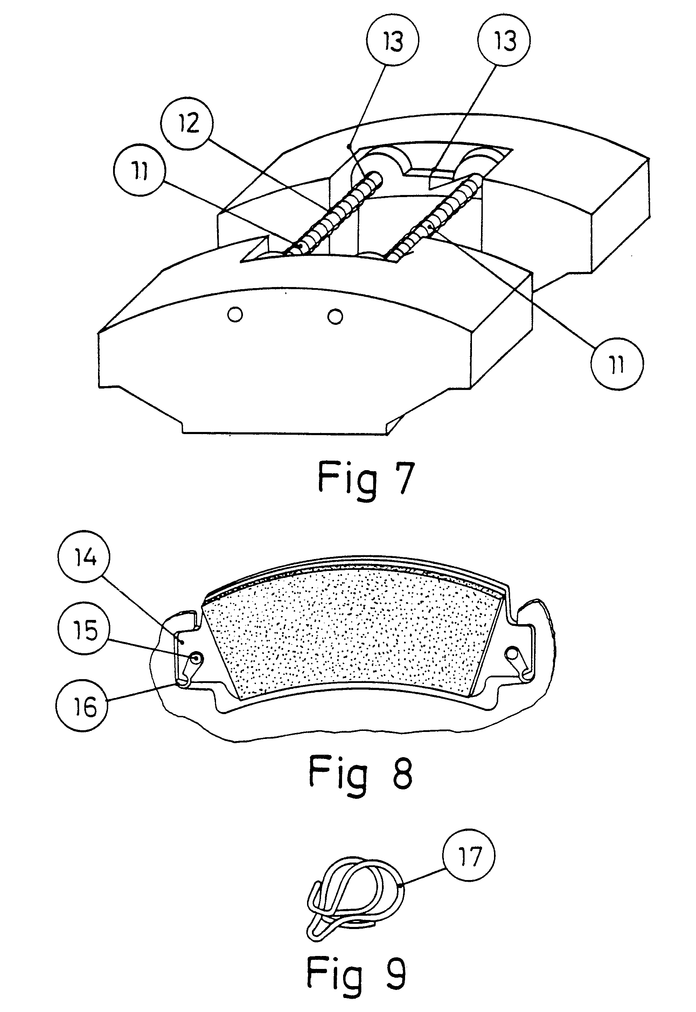

The solution of West German patent 1 475 372 of Jurid Werke GmbH comprises helical wire springs which are coiled around pins which extend between the backing plates of an opposed pair of pads. The ends of these springs flexibly support the pads. This arrangement is illustrated in Fig. 7 of the drawings.

US Patents Nos. 3 616 878 and 3 712 423 of D.B.A. describe an arrangement in which the backing plate of each pad has lateral extensions which form tabs for receiving spring elements. This is shown in Figs. 8 and 9 of the drawings.

The D.B.A. arrangement has the advantageous feature that the springs are fitted in structures which are formed by the actual pad backing plate without the need to fix them of the plates by means of pins, cotters or screws, but the arrangement has the disadvantage of requiring springs at both ends of each pad, in other words, two springs for each pad.

US patent 3 958 667 of FERODO relates to an arrangement in which a spring is fitted to the exposed side of the backing plate on the opposite side to the friction covering by means of the threaded screw.

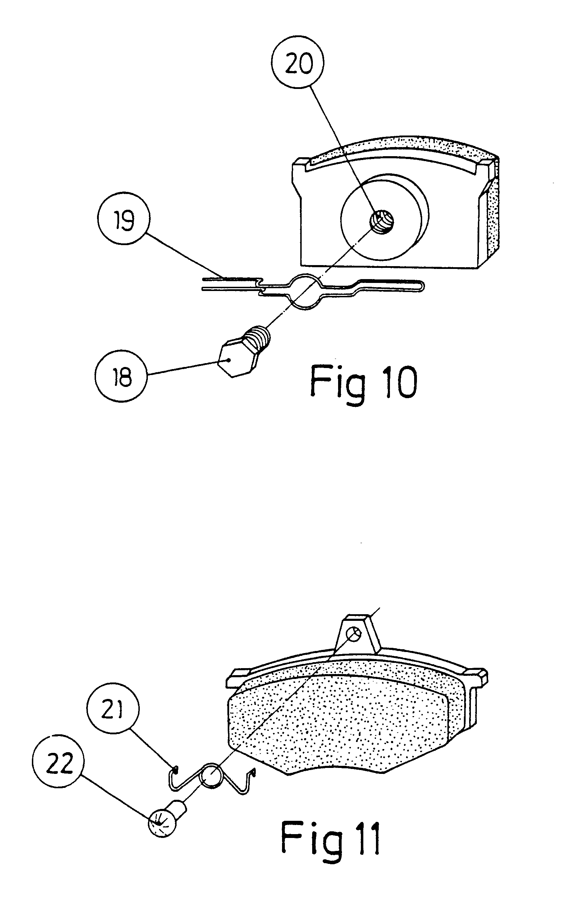

The FERODO arrangement, which can be seen in Fig. 10 of the drawings has the advantage of using only one spring for each pad but it has the disadvantage of needing a second element, a threaded screw, for its fitment.

Spanish Patent 443 780 of GIRLING LIMITED suggests a solution similar to the FERODO arrangement but has the spring coiled around the screw or pin and disposed in an upper part of the backing plate. This is shown in Fig. 11 of the drawings.

The GIRLING arrangement has the same advantage as the FERODO arrangement but also its disadvantage of requiring a second element for fitment of the spring, in this case, a rivetted rod.

Advantageously an anti-squeal and anti-vibration brake pad would have a single one-piece spring element for each brake pad, which element, through its relationship with said pad, forms a unit with the pad without the need for any other element or additional means. GB-A-1 535 720 describes such an element comprising a leaf spring with a central clip portion and two substantially oppositely directed arms securely attached to a backing plate for a pad of friction material by the clip portion. The spring is fixed to and maintains a constant attitude to the backing plate.

*Disclosure of Invention*

The present invention provides a disc brake assembly of the kind comprising a backing plate having a pad of friction material secured thereto, and a leaf spring having a central clip portion and two substantially oppositely directed arms, the leaf spring being attached to a recessed central tab on the backing plate by means of two side portions of the central clip portion which embrace the tab, characterised in that each of the two side portions of the central clip portion of the leaf spring resiliently and pivotally engages in and is removably retained in a seat in the tab so that in use the leaf spring can rock about an axis transverse to said arms in response to movement of the backing plate.

In this way, with a single one-piece element, i.e. the leaf spring, an anti-squeal and anti-vibration solution is achieved without this spring requiring the assistance of a screwed or rivetted rod for its fitment, thus avoiding the necessity of duplication of the components of the device and considerably simplifying its production and fitment. Obviously, the solution which is now being proposed simplifies the production of the brake pad enormously; moreover, this solution offers the following additional advantages.

— Wire springs have inferior resistance to fatigue compared to leaf springs.

— The production of a wire spring with all its bends and loops is considerably more complex than that of a leaf spring inasmuch as the latter is formed with a single press stroke.

— The fitment of the leaf spring enables the accomodating means in the backing plate to be formed by a simple drilled or punched through-hole through which the electric cable of the pad wear detector can pass.

— The fitment of the leaf spring ensures that the unit which is formed between it and the pad backing plate is held securely at all times without the possibility of unintentional loosening but with the possibility of selective or intentional removal of said leaf spring when this is necessary for its replacement or for other reasons, as required.

These improvements, together with other additional improvements will appear from the following description.

*Brief description of drawings*

One preferred embodiment of the invention is diagrammatically illustrated, by way of example, in Figures 1 to 6 of the accompanying drawings, in which:

Figure 1 is a perspective view of a friction pad, with the detail of Figure 1a showing a variant;

Figure 2 is a detail showing the attachment of the leaf spring;

Figures 3 and 4 are respectively an elevation and a plan view from above of the leaf spring;

Figure 5 is a section on the line V-V of Figure 3;

Figure 6 is the developed view of the spring leaf, and

Figures 7 to 11 show various known friction pad arrangements.

*Explanatory details*

1. —Leaf spring
2. —Backing plate
3. —Friction lining
4. —Through-hole (accomodating means)(seat)
5. —Electric cable
6. —Arms
7. —Central clip portions
8. —Central depression
9. —Engagement lugs
10. —Central projection or tab
11. —Rods
12. —Springs
13. —Supports
14. —Side extensions
15. —Support structures
16. —Springs
17. —Springs
18. —Screw
19. —Spring
20. —Threaded drilling
21. —Spring
22. —Rivet

Turning first to the prior art Figure 7 of the attached drawings shows the solution of German patent 1 475 372. According to this solution a pair of rods (11), extend between the two pads onto which rods springs (12) are coiled, the ends (13) of which flexibly support the pads.

Figure 8 shows the solution of US patent 3 616 878 in which the pad is provided with side extensions (14) in which support structures (15) are formed for the fitment of springs (16) which, in US patent 3 712 423, take the form of the filiform or wire spring (17), see Figure 9.

On the other hand, Figure 10 shows the solution of US patent 3 958 667 in which a wire spring (19) is used which, in a central area, is formed as an open ring for receiving a threaded screw (18) which is fixed into an opening (20) in the pad backing plate (10).

Figure 11 shows the solution of Spanish patent 443 780 which is similar to that of Figure 10. In this case a spring (21) is fixed to the pad backing plate with a rivet (22) in the upper part of the backing plate.

The common denominator in all these solutions is the need for at least two basic elements, namely springs (12) and rods (11) in the solution in Figure 7, the two spring elements (16 or 17) in Figures 8 and 9, the spring (19) and the screw (18) in Figure 10 and the spring (21) and rivet (22) in Figure 11.

*Best modes for carrying out this invention*

However, according to the solution which is now being proposed, all that is needed is a single one-piece element with the special feature that this improvement is supplemented by others which, albeit not so basic, are of great importance in order to simplify the manufacturing process and also improve the functional characteristics of the pad.

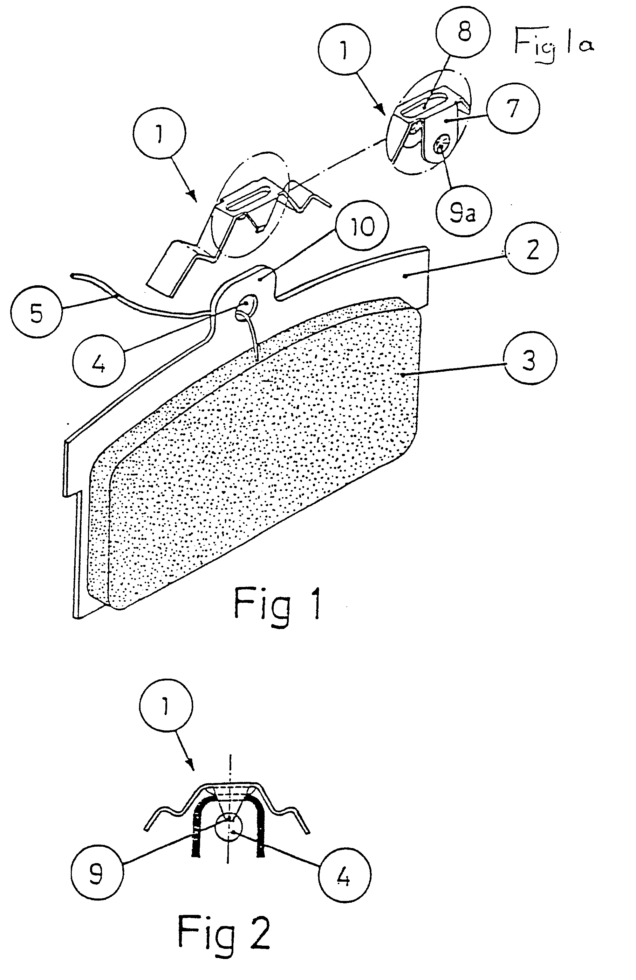

In fact, in accordance with the present invention, the pad formed as shown in Figure 1 by a backing plate (2) and by a friction lining (3) has a single one-piece element which is constituted by a leaf spring (1) as a means of avoiding squealing and vibration from said pad.

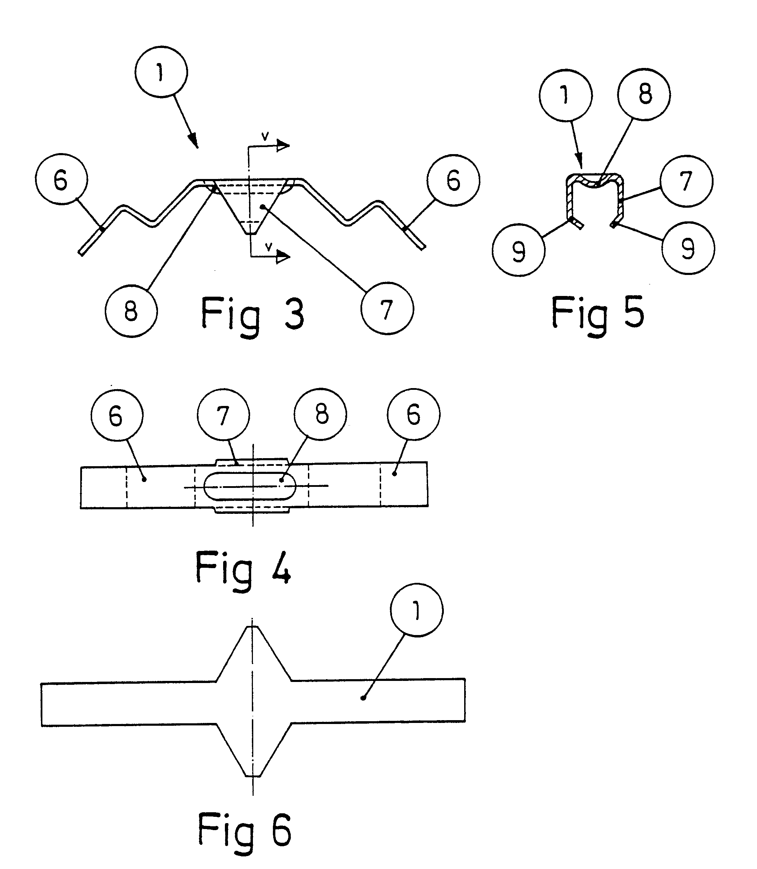

The leaf spring (1) is made from metal and its developed form is shown in Figure 6; this leaf is bent to the form shown in Figures 3, 4 and 5 by a single hammering or stamping operation, and has four extensions in substantially perpendicular directions. These extensions form equal pairs, with one pair forming arms (6) while the other pair form central clip portions (7) which extend vertically downwards. The central clip portions (7) narrow progressively towards their free ends and terminate at their free ends in engagement lugs (9).

The engagement lugs (9) are arranged to embrace and engage a seat (central through-hole) (4) in a central lug (10) extending from the upper surface of the backing plate (2) so that, through elastic deformation, the engagement lugs (9) can be accomodated in the hole (4), thereby forming a coupling which at all times prevents unintentional disengagement of the spring (1) from the backing plate (2) but, at the same time, allows its removal if this is needed for the purposes of replacement or the like, in an extremely simple operation which only entails prising the central clip portions (7) apart. According to one possible variant shown in Figure 1a, the coupling is formed by deformation of the central clip portions themselves (7) to form inwardly dished buttons (9a) which engage the holes (4) from opposite sides.

Moreover, the flexible support of the arms (6) ensures the action needed to prevent squealing and vibration since the spring element (1) is designed to describe a rocking movement in use for which purpose said element (1) has a central depression (8) with a rounded cross section; this depression (8) contacts the rounded upper edge of the central extension or tab (10) in which the hole (4) is located, thereby facilitating said rocking movement of the spring element (1).

*Industrial applicability*

This solution not only requires just a single one-piece element (1) with the improvements which this entails *per se*; it also permits direct fitment of the spring element (1) without the need for any special tool in this connection; this also makes it easier to pack the brake pad with the spring element (1) next to but not fitted to it for presentation in «display» packs in which the spring element in the solutions known to dated posed a real problem.

Similarly, it permits intentional removal while, on the other hand, it must be pointed out that the production of the element (1) in the form of a leaf spring not only makes manufacture (shaping) simpler but also ensures superior durability against fatigue resulting from repeated use.

It must also be pointed out that, as can be seen in Figure 1, in this solution a large part of the hole (4) remains free, thereby allowing passage of the cable (5) of the electrical lining wear detector, thereby providing guide and retention means for this cable (5) which had to run on the outside in the other solutions where the hole (4) was completely occupied.

Since the nature of the present invention and its industrial production have been described sufficiently, all that remains is to add that it is possible to make changes to the form, material and arrangement of the whole and its component parts without going beyond the scope of the invention as defined in the following claims.

## Claims

1. A disc brake assembly of the kind comprising a backing plate (2) having a pad (3) of friction material secured thereto, and a leaf spring (1) having a central clip portion (7) and two substantially oppositely directed arms (6), the leaf spring (1) being attached to a recessed central tab (10) on the backing plate (2) by means of two side portions (9) of the central clip portion (7) which embrace the tab (10), characterised in that each of the two side portions (9, 9a) of the central clip portion (7) of the leaf spring (1) resiliently and pivotally engages in and is removably retained in a seat (4) in the tab (10) so that in use the leaf spring (1) can rock about an axis parallel to the rotational axis of the brake disc in response to movement of the backing plate (2).

2. A disc brake pad assembly as claimed in claim 1, characterised in that each side portion has an engagement lug (9, 9a) at its free end which engage in its seat (4).

3. A disc brake pad assembly according to claim 2, characterised in that the leaf spring (1) is formed between the side portions of the central clip portion (7) with a depression (8) adapted to embrace a portion of the tab (10).

4. A disc brake pad assembly according to claim 2 or claim 3, characterised in that each of the side portions of the central clip portion (7) tapers inwardly towards its free end.

5. A disc brake pad assembly as claimed in any preceding claim, characterised in that the two substantially oppositely directed arms (6) of the leaf spring (1) are of constant width along their length.

6. A disc brake pad assembly according to any preceding claim, characterised in that the seat (4) is constituted by a through-hole in the tab (10).

## Patentansprüche

1. Scheibenbremsenvorrichtung mit einer Druckplatte (2) mit einem darauf befestigten Bremsklotz (3) aus Reibmaterial und einer Blattfeder (1) mit einem mittig angeordneten Klemmteil (7) und zwei im wesentlichen entgegengesetzt ausgerichteten Armen (6), wobei die Blattfeder (1) an einer mittig eingelassenen Zunge (10) befestigt ist, dadurch gekennzeichnet, daß jedes der beiden Seitenteile (9, 9a) des mittig angeordneten Klemmteils (7) der Blattfeder (1) federnd und schwenkbar eingreift und abnehmbar in einer Lagerung (4) in der Zunge (10) gehalten ist, so daß die Blattfeder (1) bei Gebrauch um eine Achse parallel zur Drehachse der Bremsscheibe entsprechend der Bewegung der Druckplatte (2) schwenkt.

2. Scheibenbremsklotzvorrichtung nach Anspruch 1, dadurch gekennzeichnet, daß jedes Seitenteil an seinem freien Ende eine Nase (9, 9a) zum Eingriff in die Lagerung (4) aufweist.

3. Scheibenbremsklotzvorrichtung nach Anspruch 2, dadurch gekennzeichnet, daß die Blattfeder (1) zwischen den Seitenteilen des mittig angeordneten Klemmteils (7) mit einer Vertiefung (8) versehen ist, die die Zunge (10) teilweise umfaßt.

4. Scheibenbremsklotzvorrichtung nach Anspruch 2 oder 3, dadurch gekennzeichnet, daß sich jedes der Seitenteile des mittig angeordneten Klemmteils (7) nach innen zu seinem freien Ende verjüngt.

5. Scheibenbremsklotzvorrichtung nach den vorangegangenen Ansprüchen, dadurch gekennzeichnet, daß die beiden im wesentlichen entgegengesetzt ausgerichteten Arme (6) der Blattfeder (1) ihre Breite über ihre Länge nicht verändern.

6. Scheibenbremsklotzvorrichtung nach den vorangegangenen Ansprüchen, dadurch gekennzeichnet, daß die Lagerung (4) ein Durchgangsloch in der Zunge (10) bildet.

## Revendications

1. Plaquette de freinage pour frein à disque, du genre comportant une plaque support (2) à laquelle est fixée une garniture de friction (3), et un ressort à lame (1) qui présente une partie centrale d'agrafage (7) et deux branches sensiblement opposées (6), ce ressort à lame (1) se montant sur une patte (10) prévue dans la partie médiane de la plaque support (2) et munie d'un logement, au moyen de deux appendices latéraux (9) de la partie centrale d'agrafage (7) du ressort, prévus pour venir se placer de part et d'autre de la patte (10), caractérisée en ce que chacun des deux appendices latéraux (9, 9a) de la partie centrale d'agrafage (7) du ressort à lame (1) est prévu pour s'engager élastiquement et de manière amovible dans un logement (4) ménagé dans la patte (10), et pour pouvoir pivoter dans ce logement (4), le montage ainsi réalisé étant tel que le ressort (1), en position de service, peut osciller suivant un axe parallèle à l'axe de rotation du disque de freinage, en réponse aux mouvements de la plaque support.

2. Plaquette de freinage selon la revendication 1, caractérisée en ce que chaque appendice latéral du ressort à lame porte à son extrémité libre une saillie de retenue (9, 9a), adaptée à s'engager dans son logement (4).

3. Plaquette de freinage selon la revendication 2, caractérisée en ce que le ressort à lame (1) présente, entre les appendices latéraux de sa partie centrale d'agrafage (7), une déformation en creux (8) adaptée à s'appuyer sur une partie de la patte (10) de la plaque support.

4. Plaquette de freinage selon l'une des revendications 2 ou 3, caractérisée en ce que chacun des appendices latéraux de la partie centrale d'agrafage (7) du ressort à lame présente une forme qui va en s'amincissant vers son extrémité libre.

5. Plaquette de freinage selon l'une des revendications 1 à 4, caractérisée en ce que les deux branches sensiblement opposées (6) du ressort à lame (1) ont une largeur sensiblement constante sur toute leur longueur.

6. Plaquette de freinage selon l'une des revendications 1 à 5, caractérisée en ce que le logement (4) est constitué par un trou qui traverse la patte (10) de la plaque support.

Fig 1a

Fig 1

Fig 2

Fig 3

Fig 5

Fig 4

Fig 6

Fig 7

Fig 8

Fig 9

Fig 10

Fig 11